# EUROPEAN PATENT APPLICATION

(11) **EP 2 783 580 A1**
(43) Date of publication of application: **01.10.2014**
(21) Application number: 12851438.7
(22) Date of filing: 03.09.2012
(51) Int. Cl.: A23L 2/00, A23L 2/38, C12C 7/04

(54) **NON-ALCOHOLIC BEER HAVING HIGH PROPORTION OF MONOSACCHARIDES AND DISACCHARIDES**

(30) Priority: 22.11.2011 JP 2011255369
(71) Applicant: Suntory Holdings Limited, Kita-ku Osaka-shi Osaka 530-8203 (JP)
(72) Inventor: TERANISHI, Takeshi, Fuchu-shi Tokyo 183-8533 (JP); MOTOHASHI, Itsuki, Fuchu-shi Tokyo 183-8533 (JP)
(74) Representative: Vossius & Partner
(86) International application number: PCT/JP2012/072316
(87) International publication number: WO 2013/077056

(57) **Abstract**

The present invention aims to provide a non-alcohol beer-taste beverage having a low saccharide content and a low calorie content, and that has a snappiness. The present invention provides a non-alcohol beer-taste beverage having a total amount of an extract component(s) in a specific range, and comprising a monosaccharide(s), a disaccharide(s), and a trisaccharide(s) at a specific saccharide composition.

## Description

### TECHNICAL FIELD

The present invention provides a non-alcohol beer-taste beverage having a snappiness, the production method of the same and wort used in the production.

### BACKGROUND ART

The snappiness weighed heavily in the savor of beer represents the pureness and sharpness, lightness and cleanness of flavor, and relates to the persistence of the flavor after the beer has been swallowed. Non-Patent Document 1 reports that the snappiness in beer is felt more strongly as the drop in the taste becomes larger. In p.74 to 76 of Non-Patent Document 1, it is further reported that the snappiness of beer is affected by many components, such as alcohol, sugar, bitterness components, amino acids, nucleic acids, organic acids, polyphenols, carbon acid gas, and by the balance in the amount ratio of these components as well as the complex interaction among those components.

Patent Document 1 reports a beer-flavored alcohol beverage having a low calorie content, that comprises added secondary components comprising a water-soluble dietary fiber and a non-fermentable saccharide, and that has an excellent balance between flavor such as the taste and the snappiness (quality of taste), and body.

Patent Document 2 reports a beer-flavored carbonated drink having the snappiness, that contains glucose at a concentration of 0.2 w/v% or lower and maltose at a concentration of 2.0 w/v% or lower, wherein a total concentration of polysaccharides whose polymerization degree are the same as maltotriose or higher is 2.0 to 3.0 w/v%.

The recent health consciousness of consumers is increasing the demand for non-alcoholic beer-taste beverages, that is, beverages with 0.00% alcohol. A non-alcohol beer-taste beverage is often manufactured without being put through the fermentation step which generates alcohol, that is, at a condition that is exclusive of fermentation.

### CITATION LIST

### PATENT DOCUMENTS

Patent Document 1: Japanese Patent Unexamined Publication No. 2009-142233
Patent Document 2: Japanese Patent Unexamined Publication No. 2003-250503

### NON-PATENT DOCUMENTS

Non-Patent Document 1: Junji Watari "Biru no Kagaku (Science of Beer)", June 4, 2010, 7th issue, Kodansha.

### SUMMARY OF INVENTION

### TECHNICAL PROBLEM

To realize a low saccharide content and a low calorie content in the non-alcohol beer-taste beverage, the total amount of its extract components needs to be made low, and thus, it is difficult for the beverage to have body. Hence, it is difficult to add the snappiness to the non-alcohol beer-taste beverage having a low saccharide content and a low calorie content, by giving body to it to induce a sense of sharp decline in the taste. The present invention aims to provide a non-alcohol beer-taste beverage having a snappiness.

### SOLUTION TO PROBLEM

In view of the above situation, the present inventors conducted intensive studies and found that reducing the proportion of trisaccharides, which are a cause of a sense of body, in the saccharides unexpectedly produces a non-alcohol beer-taste beverage having a snappiness. This finding was a surprising one, completely beyond expectation. Based on this finding, the inventors found that by providing the non-alcohol beer-taste beverage with a specific saccharide composition, it is possible to add a snappiness to the non-alcohol beer-taste beverage; and completed the invention.

The present invention provides a non-alcohol beer-taste beverage, a production method thereof and wort used in the production, according to (1) to (20).
(1) A non-alcohol beer-taste beverage, wherein a total amount of an extract component(s) is from 0.1 to 0.5% by weight inclusive, and a ratio of the sum of the weights of a monosaccharide(s) and a disaccharide(s) to the weight of a trisaccharide(s) (sum of w/v% of the monosaccharide(s) and the disaccharide(s)/w/v% of the trisaccharide(s)) is from 2.5 to 11 inclusive.
(2) The non-alcohol beer-taste beverage of (1), wherein the ratio of the sum of the weights of the monosaccharide(s) and the disaccharide(s) to the weight of the trisaccharide(s) is from 4.8 to 8 inclusive.
(3) The non-alcohol beer-taste beverage of (1), wherein the ratio of the sum of the weights of the monosaccharide(s) and the disaccharide(s) to the weight of the trisaccharide(s) is from 6 to 6.2 inclusive.
(4) The non-alcohol beer-taste beverage according to any one of (1) to (3), wherein the total amount of the extract component(s) is from 0.1 to 0.35% by weight inclusive.
(5) The non-alcohol beer-taste beverage according to any one of (1) to (4), wherein a calorie content is from 0.4 to 2 kcal/100 ml inclusive.
(6) The non-alcohol beer-taste beverage according to (5), wherein the calorie content is from 0.4 to 1.4 kcal/100 ml inclusive.
(7) The non-alcohol beer-taste beverage according to any one of (1) to (6), wherein a saccharide content is from 0.1 to 0.5 g/100 ml inclusive.
(8) The non-alcohol beer-taste beverage according to (7), wherein the saccharide content is from 0.1 to 0.35 g/100 ml inclusive.
(9) The non-alcohol beer-taste beverage according to any one of (1) to (8), wherein the extract component(s) comprise a *mugi*-derived extract component(s).
(10) The non-alcohol beer-taste beverage according to any one of (1) to (9), which is a non-fermented, non-alcohol, beer-taste beverage.
(11) Wort having a total amount of an extract component(s) that is from 0.1 to 0.5% by weight inclusive, and a ratio of the sum of the weights of a monosaccharide(s) and a disaccharide(s) to the weight of a trisaccharide(s) (sum of w/v% of the monosaccharide(s) and the disaccharide(s)/w/v% of the trisaccharide(s)) that is from 2.5 to 11 inclusive.
(12) The wort according to (11), wherein the ratio of the sum of the weights of the monosaccharide(s) and the disaccharide(s) to the weight of the trisaccharide(s) is from 4.8 to 8 inclusive.
(13) The wort according to (11), wherein the ratio of the sum of the weights of the monosaccharide(s) and the disaccharide(s) to the weight of the trisaccharide(s) is from 6 to 6.2 inclusive.
(14) The wort according to any one of (11) to (13), wherein the total amount of the extract component(s) is from 0.1 to 0.35% by weight inclusive.
(15) A production method of a non-alcohol beer-taste beverage comprising a step of adding a seasoning component and a carbon acid gas to wort having a total amount of an extract component(s) that is from 0.1 to 0.5% by weight inclusive, and a ratio of the sum of the weights of a monosaccharide(s) and a disaccharide(s) to the weight of a trisaccharide(s) (sum of w/v% of the monosaccharide(s) and the disaccharide(s)/w/v% of the trisaccharide(s)) that is from 2.5 to 11 inclusive.
(16) The production method according to (15), wherein the ratio of the sum of the weights of the monosaccharide(s) and the disaccharide(s) to the weight of the trisaccharide(s) is from 4.8 to 8 inclusive.
(17) The production method according to (15), wherein the ratio of the sum of the weights of the monosaccharide(s) and the disaccharide(s) to the weight of the trisaccharide(s) is from 6 to 6.2 inclusive.
(18) The production method according to any one of (15) to (17), using dark colored malt at from 20 to 80% by weight inclusive, relative to the total amount of the malt.
(19) The production method according to any one of (15) to (18), wherein the beer-taste beverage is a non-fermented, non-alcohol, beer-taste beverage.
(20) The production method according to any one of (15) to (19), for producing the non-alcohol beer-taste beverage according to any one of (1) to (10).

### ADVANTAGEOUS EFFECTS OF INVENTION

The present invention can provide a non-alcohol beer-taste beverage having a low saccharide content and a low calorie content, and that has a snappiness.

### DESCRIPTION OF EMBODIMENTS

### <Non-Alcohol Beer-Taste Beverage>

As one aspect, the present invention provides a non-alcohol beer-taste beverage. In particular, in the present specification, the non-alcohol beer-taste beverage can be a non-fermented beer-taste beverage. The non-alcohol beer-taste beverage of the present invention comprises a saccharide(s). The saccharide content of the beer-taste beverage can be in a range defined by any combination of a lower limit of 0.1 g/100 ml or higher, preferably 0.15 g/100 ml or higher, more preferably 0.2 g/100 ml or higher, and an upper limit of 1.2 g/100 ml or lower, preferably 1.0 g/100 ml or lower, more preferably 0.8 g/100 ml or lower, even more preferably 0.6 g/100 ml or lower, still more preferably 0.5 g/100 ml or lower, still even more preferably 0.4 g/100 ml or lower, more preferably 0.35 g/100 ml or lower, and most preferably 0.3 g/100 ml or lower. For example, the saccharide content in the beer-taste beverage can be from 0.1 to 0.5 g/100 ml inclusive, preferably from 0.1 to 0.25 g/ 100 ml inclusive, more preferably from 0.1 to 0.125 g/100 ml inclusive. Further examples of the saccharide contents in the beer-taste beverage are from 0.1 to 1.2 g/100 ml inclusive, preferably from 0.1 to 1.0 g/100 ml inclusive, more preferably from 0.1 to 0.8 g/100 ml inclusive, even more preferably from 0.1 to 0.6 g/100 ml inclusive, still more preferably from 0.1 to 0.5 g/100 ml inclusive, still even more preferably from 0.1 to 0.4 g/100 ml inclusive, more preferably from 0.1 to 0.35 g/100 ml inclusive, more preferably from 0.15 to 0.35 g/100 ml inclusive, and most preferably from 0.2 to 0.3 g/100 ml inclusive. Generally speaking, it is important to enlarge the drop from the top of thickness and fullness sensed when beer is held in the mouth to the complete disappearance of the taste. Trisaccharides or other shaccharides having a polymerization degree higher than the trisaccharides are known to increase the thickness and volume of the taste of beer. That is, a lower proportion of the trisaccharides or saccharides having a polymerization degree higher than the trisaccharides results in a smaller drop, and reduces or eliminates the snappiness. The present invention enhances the snappiness of a non-alcohol beer-taste beverage by adjusting the saccharide composition in such a way that the adjustment will reduce or eliminates the snappiness if the adjustment is made in beer, specifically, by reducing the proportion of trisaccharides or saccharides having a polymerization degree higher than the trisaccharides, and increasing the proportion of monosaccharides and disaccharides.

The saccharide composition of the non-alcohol beer-taste beverage of the present invention can be defined by the ratio of the sum of the weights of a monosaccharide(s) and a disaccharide(s) to the weight of a trisaccharide(s). The non-alcohol beer-taste beverage of the present invention comprises a monosaccharide(s), a disaccharide(s) and a trisaccharide(s), and the ratio of the sum of the weights of the monosaccharide(s) and the disaccharide(s) to the weight of the trisaccharide(s) (sum of w/v% of the monosaccharide(s) and the disaccharide(s)/w/v% of the trisaccharide(s)) is in a range defined by a combination of a lower limit of 2.5 or higher, preferably 3.5 or higher, more preferably 4.2 or higher, even more preferably 4.8 or higher, still more preferably 5.3 or higher, still even more preferably 5.8 or higher, more preferably 5.9 or higher, and most preferably 6 or higher, and an upper limit of 11 or lower, preferably 10 or lower, more preferably 9 or lower, even more preferably 8 or lower, still more preferably 7.2 or lower, still even more preferably 6.4 or lower, more preferably 6.3 or lower, more preferably 6.2 or lower, and most preferably 6.15 or lower. For example, the non-alcohol beer-taste beverage comprises the monosaccharide(s), the disaccharide(s), and the trisaccharide(s), and has the ratio of the sum of the weights of the monosaccharide(s) and the disaccharide(s) to the weight of the trisaccharide(s) (sum of w/v% of the monosaccharide(s) and the disaccharide(s)/w/v% of the trisaccharide(s)) of from 3.5 to 10 inclusive, preferably from 4.8 to 8 inclusive, more preferably from 5.8 to 6.4 inclusive, even more preferably from 6 to 6.2 inclusive. Further examples of non-alcohol beer-taste beverages comprise the monosaccharide(s), the disaccharide(s), and the trisaccharide(s), and have the ratio of the sum of the weights of the monosaccharide(s) and the disaccharide(s) to the weight of the trisaccharide(s) (sum of w/v% of the monosaccharide(s) and the disaccharide(s)/w/v% of the trisaccharide(s)) of from 2.5 to 11 inclusive, preferably from 3.5 to 10, more preferably from 4.2 to 9 inclusive, even more preferably from 4.8 to 8 inclusive, still more preferably from 5.3 to 7.2 inclusive, still even more preferably from 5.8 to 6.4 inclusive, more preferably from 5.9 to 6.3 inclusive, more preferably from 6 to 6.2 inclusive, and most preferably from 6 to 6.15 inclusive.

An analysis of the saccharide composition and a measurement of the saccharide concentration (weight/volume%) can be performed by a known liquid chromatography method (Analytica-EBC (2010.8) 8.7).

The term "beer-taste beverages" as used herein refers to carbonated drinks having a beer-like flavor. Thus, unless otherwise noted, beer-taste beverages as referred to herein embrace all types of carbonated drinks with a beer flavor whether or not they are produced via a yeast-based fermentation step. The present invention is directed to a particular type, non-alcoholic type, for example, unfermented non-alcoholic type, of these beverages, which is substantially free of alcohol. It should be noted here that beverages which contain alcohol in a trace amount that is too small to be detected are within the scope of the beverages of the present invention. Included within the scope of the non-alcohol beverage of the present invention are beverages the alcohol content of which is calculated to be 0.0%, in particular, 0.00% by counting fractions of 5 and over as a unit and cutting away the rest. Since it is difficult to completely remove alcohol from beverages that has been fermented by yeast, a beverage with alcohol at a level of 0.00% by counting fractions of 5 and over as a unit and cutting away the rest, should preferably be produced by a method that is exclusive of fermentation. In the present specification, the term "non-fermented" or "exclusive of fermentation" refers to the lack of decomposition of organic matters by microorganism, and it specifically refers to the lack of alcohol developing from decomposition of organic matters by yeast. Exemplary types of the non-alcoholic beer-taste beverages of the present invention include non-fermented, non-alcohol, beer-taste beverages, beer-taste soft drinks, and the like.

The alcohol content in the beer-taste beverage in the present specification is the content of alcohol in the beverage (v/v%); the alcohol can be measured using any known method. In the present specification, an oscillating densimeter can be used for the measurement. A specific example is provided below. The beverage is filtered or subjected to ultrasonication to prepare a sample that is free of carbonic acid gas. The sample is put under direct fire for distillation to obtain a distilled solution, and the density of the solution is measured at 15°C. "Table 2 Conversion Table for Alcohol and Density (15°C) and Specific Gravity (15/15°C)" in the appendix table to the Predetermined Analysis Method of the National Tax Agency (Directive No. 6 of the National Tax Agency in 2007, revised June 22, 2007) can be used to convert the above measurement to obtain the alcohol content in the beverage. Further, if the alcohol is at a low concentration (e.g. lower than 1.0 v/v%), it can be measured using a commercial alcohol measurement device or gas chromatography or the like.

The term "saccharides" as used herein refers to ones based on the Nutrition Labelling Standards for Foods (Health, Labor and Welfare Ministry Notice No. 176 in 2003). Saccharides include monosaccharides and oligosaccharides such as disaccharides, trisaccharides, tetrasaccharides to decasaccharides. Monosaccharides include glucose, fructose, galactose, and mannose. Disaccharides include sucrose, lactose, maltose, trehalose, cellobiose. Oligosaccharides that are trisaccharides or saccharides having a polymerization degree higher than the trisaccharides include stachyose, maltotriose, maltotetraose, maltopentaose. The saccharide content can be obtained by subtracting the amount of protein, fat, dietary fiber, ash, alcohol and water from the weight of the entire beverage. The protein, fat, dietary fiber, ash and water can be measured by the methods in the Nutrition Labeling Standards. Specifically, the mass of protein can be measured by the nitrogen determination and conversion method. The amount of fat can be measured by the ether extracting method, chloroform-methanol mixture extracting method, the Gerber method, the acid hydrolysis method, or the Roese-Gottlieb method. The amount of dietary fiber can be measured by the high performance liquid chromatography method or the ashing method with added sulfuric acid. The amount of water can be measured using the Karl Fischer technique, the drying aid method, a method of heating and drying under reduced pressure, a method of heating and drying under normal pressure, or a plastic film method. These measurement methods are commonly known among persons skilled in the art.

The non-alcohol beer-taste beverage of the present invention contains an extract component(s). The total amount of the extract component(s) in the non-alcohol beer-taste beverage of the present invention affects the effect of the present invention, which is to provide a beverage having a low saccharide content and a low calorie content. Hence, the total amount of the extract component(s) should be in a range that does not hinder the effect of the present invention. The total amount of the extract component(s) in the non-alcohol beer-taste beverage is in a range defined by any combination of a lower limit of 0.1% by weight or higher, preferably 0.15% by weight or higher, more preferably 0.2% by weight or higher, and an upper limit of 1.2% by weight or lower, preferably 1% by weight or lower, more preferably 0.8% by weight or lower, even more preferably 0.6% by weight or lower, still more preferably 0.5% by weight or lower, still even more preferably 0.4% by weight or lower, more preferably 0.35% by weight or lower, and most preferably 0.3% by weight or lower. For example, the total amount of the extract component(s) in the non-alcohol beer-taste beverage can be from 0.1 to 0.5% by weight inclusive, preferably from 0.1 to 0.25% by weight inclusive, more preferably from 0.1 to 0.125% by weight inclusive. Further examples of the total amount of the extract component(s) in the non-alcohol beer-taste beverage are from 0.1 to 1.2% by weight inclusive, preferably from 0.1 to 1% by weight inclusive, more preferably from 0.1 to 0.8% by weight inclusive, even more preferably from 0.1 to 0.6% by weight inclusive, still more preferably from 0.1 to 0.5% by weight inclusive, still even more preferably from 0.1 to 0.4% by weight inclusive, more preferably from 0.1 to 0.35% by weight inclusive, more preferably from 0.15 to 0.35% by weight inclusive, and most preferably from 0.2 to 0.3% by weight inclusive. Here, the total amount of the extract component(s) is the sum of the extract component(s) contained in the non-alcohol beer-taste beverage, and it can be measured according to the "Beer Analysis Methods of BCOJ (2004.11.1 Revised ed.) 7.2 Extracts".

Further, the above mentioned extract component(s) may contain a *mugi*-derived extract component(s). The *mugi*-derived extract component(s) in the present specification may be any extract component(s) derived from *mugi,* such as malt, and *mugi* of any origin can be used as a source. The total amount of the extract component(s) derived from *mugi* may be determined for their amount by subtracting the amounts, as separately determined, of additives and extract components derived from other ingredients, from the amounts of all extract components.

If the non-alcohol beer-taste beverage of the present invention comprises the *mugi-*derived extract component(s), the amount of the *mugi*-derived extract component(s) contained in the non-alcohol beer-taste beverage can be in a range defined by any combination of a lower limit of 0.1% by weight or higher, preferably 0.15% by weight or higher, more preferably 0.2% by weight or higher, and an upper limit of 1.2% by weight or lower, preferably 1% by weight or lower, more preferably 0.8% by weight or lower, even more preferably 0.6% by weight or lower, still more preferably 0.5% by weight or lower, still even more preferably 0.4% by weight or lower, more preferably 0.35% by weight or lower, and most preferably 0.3% by weight or lower. If the *mugi*-derived extract component(s) are contained in the non-alcohol beer-taste beverage of the present invention, exemplary amounts of the *mugi*-derived extract component(s) in the non-alcohol beer-taste beverage of the present invention are from 0.1 to 0.5% by weight inclusive, preferably from 0.1 to 0.25% by weight inclusive, more preferably from 0.1 to 0.125% by weight inclusive. If the *mugi-*derived extract component(s) are contained in the non-alcohol beer-taste beverage of the present invention, further examples of the amount of the *mugi*-derived extract component(s) in the non-alcohol beer-taste beverage of the present invention are from 0.1 to 1.2% by weight inclusive, preferably from 0.1 to 1% by weight inclusive, more preferably from 0.1 to 0.8% by weight inclusive, even more preferably from 0.1 to 0.6% by weight inclusive, still more preferably from 0.1 to 0.5% by weight inclusive, still even more preferably from 0.1 to 0.4% by weight inclusive, more preferably from 0.1 to 0.35% by weight inclusive, more preferably from 0.15 to 0.35% by weight inclusive, and most preferably from 0.2 to 0.3% by weight inclusive.

The term *"mugi"* as used herein means *mugi* that is commonly employed in producing beers and *happoshu.* The above *mugi* means Poaceae grains with similar appearances. It includes barley, wheat, rye, *karasumugi* (white oats), oat, *hatomugi* (Job's tears), *embaku* (oats), and the one preferably used is barley. A single type can be used alone or two or more types can be combined for use. The above *mugi* may or may not be germinated, but germinated *mugi* is preferable in the present invention. Malt is more preferable among the germinated *mugi.* Malt as mentioned in the present specification is a product obtained by drying the sprouts of *mugi,* and removing their roots. A single type of malt, such as two-rowed barley malt, can be used alone. Alternatively, two or more types of malt can be combined for use. For example, a mixture of two-rowed barley malt and caramel malt can be used, to add a spicy fragrance and a color to the non-alcohol beer-taste beverage.

As used herein, the term "dark colored malt" refers to such malts that the chromaticity as specified by EBC (the European Brewery Convention) is at least 10, preferably at least 50. Dark colored malt may be used as one ingredient to adjust the color of the beverage. Methods of measuring the EBC chromaticity are widely known to skilled artisans, who can readily perform a measurement by referring, for example, to "Revised BCOJ Beer Analysis Methods, 4.3.8" compiled by Brewery Convention of Japan (Committee on Analysis) of Brewers Association of Japan, Brewing Society of Japan.

The calorie content in the non-alcohol beer-taste beverage in the present invention can be in the range defined by any combination of a lower limit of 0.4 kcal or higher, preferably 0.6 kcal or higher, more preferably 0.8 kcal or higher, and an upper limit of 4.8 kcal or lower, preferably 4.4 kcal or lower, more preferably 3.2 kcal or lower, even more preferably 2.4 kcal or lower, still more preferably 2 kcal or lower, still even more preferably 1.6 kcal or lower, more preferably 1.4 kcal or lower, and most preferably 1.2 kcal or lower, per 100 ml of the beverage. For example, the calorie content in the non-alcohol beer-taste beverage of the present invention can be from 0.4 to 2 kcal inclusive, preferably from 0.4 to 1 kcal inclusive, more preferably from 0.4 to 0.5 kcal inclusive, per 100 ml of the beverage. Further examples of the calorie content in the non-alcohol beer-taste beverage of the present invention are from 0.4 to 4.8 kcal inclusive, preferably from 0.4 to 4.4 kcal inclusive, more preferably from 0.4 to 3.2 kcal inclusive, even more preferably from 0.4 to 2.4 kcal inclusive, still more preferably from 0.4 to 2 kcal inclusive, still even more preferably from 0.4 to 1.6 kcal inclusive, more preferably from 0.4 to 1.4 kcal inclusive, more preferably from 0.6 to 1.4 kcal inclusive, and most preferably from 0.8 to 1.2 kcal inclusive, per 100 ml of the beverage.

The calorie content in the beverages is calculated basically in accordance with "On Analysis Methods, etc. for Nutrients, etc. Listed in the Nutrition Labelling Standards" as published in association with the Health Promotion Act.

In other words, as a rule, the calorie can be obtained by multiplying the quantified amount of each nutrient with its energy conversion factor (protein: 4 kcal/g, fat: 9 kcal/g, saccharide: 4 kcal/g, dietary fiber: 2 kcal/g, alcohol: 7 kcal/g, organic acid: 3 kcal/g) and totaling the products. For details, see "On Analysis Methods, etc. for Nutrients, etc. Listed in the Nutrition Labelling Standards."

Specific techniques for measuring the amounts of the respective nutrients contained in beverages may comply with the various methods of analysis described in "On Analysis Methods, etc. for Nutrients, etc. Listed in the Nutrition Labelling Standards" as a supplement to the Health Promotion Act. Alternatively, the Japan Food Research Laboratories (Foundation) will provide such calorific values and/or the amounts of the respective nutrients upon request.

As another aspect, the present invention provides wort having a total amount of the extract component(s) in a specific range, and comprising the monosaccharide(s), the disaccharide(s), and the trisaccharide(s) at a specific saccharide composition. The total amount of the extract component(s) in the wort of the present invention can be in a range defined by any combination of a lower limit of 0.1% by weight or higher, preferably 0.15% by weight or higher, more preferably 0.2% by weight or higher, and an upper limit of 1.2% by weight or lower, preferably 1% by weight or lower, more preferably 0.8% by weight or lower, even more preferably 0.6% by weight or lower, still more preferably 0.5% by weight or lower, still even more preferably 0.4% by weight or lower, more preferably 0.35% by weight or lower, and most preferably 0.3% by weight or lower. Exemplary amounts of the extract component(s) in the wort of the present invention are from 0.1 to 0.5% by weight inclusive, preferably from 0.1 to 0.25% by weight inclusive, more preferably from 0.1 to 0.125% by weight inclusive. Further examples of the total amount of the extract component(s) in the wort of the present invention are from 0.1 to 1.2% by weight inclusive, preferably from 0.1 to 1% by weight inclusive, more preferably from 0.1 to 0.8% by weight inclusive, even more preferably from 0.1 to 0.6% by weight inclusive, still more preferably from 0.1 to 0.5% by weight inclusive, still even more preferably from 0.1 to 0.4% by weight inclusive, more preferably from 0.1 to 0.35% by weight inclusive, more preferably from 0.15 to 0.35% by weight inclusive, and most preferably from 0.2 to 0.3% by weight inclusive.

Further, the ratio of the sum of the weights of the monosaccharide(s) and the disaccharide(s) to the weight of the trisaccharide(s) (sum of w/v% of the monosaccharide(s) and the disaccharide(s)/w/v% of the trisaccharide(s)) in the wort of the present invention can be a range defined by any combination of a lower limit of 2.5 or higher, preferably 3.5 or higher, more preferably 4.2 or higher, even more preferably 4.8 or higher, still more preferably 5.3 or higher, still even more preferably 5.8 or higher, more preferably 5.9 or higher, and most preferably 6 or higher, and an upper limit of 11 or lower, preferably 10 or lower, more preferably 9 or lower, even more preferably 8 or lower, still more preferably 7.2 or lower, still even more preferably 6.4 or lower, more preferably 6.3 or lower, more preferably 6.2 or lower, and most preferably 6.15 or lower. For example, the ratio of the sum of the weights of the monosaccharide(s) and the disaccharide(s) to the weight of the trisaccharide(s) (sum of w/v% of the monosaccharide(s) and the disaccharide(s)/w/v% of the trisaccharide(s)) in the wort of the present invention can be from 3.5 to 10 inclusive, preferably from 4.8 to 8 inclusive, more preferably from 5.8 to 6.4 inclusive, even more preferably from 6 to 6.2 inclusive. Further examples of the ratio of the sum of the weights of the monosaccharide(s) and the disaccharide(s) to the weight of the trisaccharide(s) (sum of w/v% of the monosaccharide(s) and the disaccharide(s)/w/v% of the trisaccharide(s)) in the wort of the present invention are from 2.5 to 11 inclusive, preferably from 3.5 to 10 inclusive, more preferably from 4.2 to 9 inclusive, even more preferably from 4.8 to 8 inclusive, still more preferably from 5.3 to 7.2 inclusive, still even more preferably from 5.8 to 6.4 inclusive, more preferably from 5.9 to 6.3 inclusive, more preferably from 6 to 6.2 inclusive, and most preferably from 6 to 6.15 inclusive.

The amount of the *mugi*-derived extract component(s) in the wort of the present invention can be in a range defined by any combination of a lower limit of 0.1% by weight or higher, preferably 0.15% by weight or higher, more preferably 0.2% by weight or higher, and an upper limit of 1.2% by weight or lower, preferably 1% by weight or lower, more preferably 0.8% by weight or lower, even more preferably 0.6% by weight or lower, still more preferably 0.5% by weight or lower, still even more preferably 0.4% by weight or lower, more preferably 0.35% by weight or lower, and most preferably 0.3% by weight or lower. The wort of the present invention can for example contain the *mugi*-derived extract component(s) at a concentration of from 0.1 to 0.5% by weight inclusive, preferably from 0.1 to 0.25% by weight inclusive, more preferably from 0.1 to 0.125% by weight inclusive. Further, the wort of the present invention can for example contain the *mugi*-derived extract component(s) at a concentration of from 0.1 to 1.2% by weight inclusive, preferably from 0.1 to 1% by weight inclusive, more preferably from 0.1 to 0.8% by weight inclusive, even more preferably from 0.1 to 0.6% by weight inclusive, still more preferably from 0.1 to 0.5% by weight inclusive, still even more preferably from 0.1 to 0.4% by weight inclusive, more preferably from 0.1 to 0.35% by weight inclusive, more preferably from 0.15 to 0.35% by weight inclusive, and most preferably from 0.2 to 0.3% by weight inclusive.

The amount of the extract component(s) in the wort can be measured according to the "Beer Analysis Methods of BCOJ (2004.11.1 Revised ed.) 7.2 Extracts".

A non-alcohol beer-taste beverage can be obtained by adding degassed water, carbonic acid gas, seasoning components and the like to the wort of the present invention. That is, the wort of the present invention is useful as an intermediate to produce a non-alcohol beer-taste beverage. The wort can be stored in the storage tank, container and the like until its use. The wort can be stored at a normal temperature (2.5°C) or lower, but it is preferable to cool the wort during storage to suppress degradation. Wort is cooled herein at, for example, 20°C or lower, preferably 15°C or lower, and more preferably 10°C or lower. Cooled wort is referred to particularly as cold wort. One embodiment of the use of wort in the present invention comprises processes of producing wort in a factory as an intermediate of a non-alcohol beer-taste beverage, filling the wort in a refrigerating container, delivering it to other factories in this country or abroad, and producing a non-alcohol beer-taste beverage.

### <Production Method of Non-Alcohol Beer-Taste Beverage>

As another aspect, the present invention provides a production method of non-alcohol beer-taste beverage. Any means can be used in the production method as long as a non-alcohol beer-taste beverage having a total amount of the extract component(s) in a specific range and comprising the monosaccharide(s), the disaccharide(s) and the trisaccharide(s) at a specific saccharide composition can be produced. For example, the production method of non-alcohol beer-taste beverage of the present invention comprises a wort preparation step and a product preparation step.

The wort preparation step as used herein can comprise, for example, a mashing step, a wort-filtering step, and a wort-boiling step.

The mashing step includes a saccharification step and a proteolysis step. The saccharification step mentioned herein is a step of suspending and dissolving the carbon source and/or the nitrogen source, that is derived from malt and the like crushed in a pulverizer, in water to decompose saccharides such as starch to generate sugar. The proteolysis step is a step of decomposing protein, peptide and the like to generate amino acids and oligopeptides.

The mashing step is for example carried out by mixing raw materials such as malt and water, and processing the mixture at a given temperature for a given time. When using malt as the raw material, the malt should be crushed malt.

A single type of malt can be used alone, or two or more types of malt can be combined for use. For example, two-rowed barley malt can be used alone, or it can be combined with other types of malt. Here, other types of malt to be used can be dark colored malt, which can add a spicy fragrance and a color to the non-alcohol beer-taste beverage.

As used herein, the term "dark colored malt" refers to such malts that the chromaticity as specified by EBC (the European Brewery Convention) is at least 10, preferably at least 50. Dark colored malt can be used as one ingredient to adjust the color of the beverage. Preferably, dark colored malt can be used in an amount relative to the total amount of the ingredient malt of 20 to 80% by weight, preferably 40 to 60% by weight. There is no particular upper limit of the EBC chromaticity of the dark colored malt, but malt having an excessively high chromaticity may have influences on the beverage, such as a trace of a burnt smell; hence, it is recommended to use dark colored malt having the EBC chromaticity of preferably 2,000 or lower, more preferably 1,000 or lower, even more preferably 500 or lower and most preferably 200 or lower. Accordingly, the range of EBC chromaticity of the dark colored malt is not particularly limited, but it is preferably from 10 to 2,000 inclusive, more preferably from 50 to 1,000 inclusive, even more preferably from 50 to 500 inclusive, and most preferably from 50 to 200 inclusive. Methods of measuring the EBC chromaticity are widely known to skilled artisans, who can readily perform a measurement by referring, for example, to "Revised BCOJ Beer Analysis Methods, 4.3.8" compiled by Brewery Convention of Japan (Committee on Analysis) of Brewers Association of Japan, Brewing Society of Japan.

The amounts of malt, secondary ingredients, and water to be used in the mashing step can be set so that the range of the total amount of the extract component(s) in wort obtained through the wort preparation step or the total amount of the extract component(s) in the non-alcohol beer-taste beverage obtained through the wort preparation step and the product preparation step is any combination of a lower limit of 0.1 % by weight or higher, preferably 0.15% by weight or higher, more preferably 0.2% by weight or higher, and an upper limit of 1.2% by weight or lower, preferably 1% by weight or lower, more preferably 0.8% by weight or lower, even more preferably 0.6% by weight or lower, still more preferably 0.5% by weight or lower, still even more preferably 0.4% by weight or lower, more preferably 0.35% by weight or lower, and most preferably 0.3% by weight or lower. The amounts of malt, secondary ingredients, and water to be used in the mashing step can be for example set so that the range of the total amount of the extract component(s) in wort obtained through the wort preparation step or the total amount of the extract component(s) in the non-alcohol beer-taste beverage obtained through the wort preparation step and the product preparation step is from 0.1 to 0.5% by weight inclusive, preferably from 0.1. to 0.25% by weight inclusive, more preferably from 0.1 to 0.125% by weight inclusive. Further, the amounts of malt, secondary ingredients, and water to be used in the mashing step can be for example set so that the range of the total amount of the extract component(s) in wort obtained through the wort preparation step or the total amount of the extract component(s) in the non-alcohol beer-taste beverage obtained through the wort preparation step and the product preparation step is from 0.1 to 1.2% by weight inclusive, preferably from 0.1 to 1% by weight inclusive, more preferably from 0.1 to 0.8% by weight inclusive, even more preferably from 0.1. to 0.6% by weight inclusive, still more preferably from 0.1 to 0.5% by weight inclusive, still even more preferably from 0.1 to 0.4% by weight inclusive, more preferably from 0.1 to 0.35% by weight inclusive, more preferably from 0.15 to 0.35% by weight inclusive, and most preferably from 0.2 to 0.3% by weight inclusive.

The conditions of the mashing step can be set to bring about a lower proportion of the trisaccharide(s) or saccharide(s) having a polymerization degree higher than the trisaccharides and a higher proportion of the monosaccharide(s) and the disaccharide(s) through sufficient saccharification. For example, the mashing condition can be set so that the wort obtained through the wort preparation step or the non-alcohol beer-taste beverage obtained through the wort preparation step and the product preparation step has the ratio of the sum of the weights of the monosaccharide(s) and the disaccharide(s) to the weight of the trisaccharide(s) (sum of w/v% of the monosaccharide(s) and the disaccharides/w/v% of the trisaccharide(s)) that is in a range defined by any combination of a lower limit of 2.5 or higher, preferably 3.5 or higher, more preferably 4.2 or higher, even more preferably 4.8 or higher, still more preferably 5.3 or higher, still even more preferably 5.8 or higher, more preferably 5.9 or higher, more preferably 6 or higher, and an upper limit of 11 or lower, preferably 10 or lower, more preferably 9 or lower, even more preferably 8 or lower, still more preferably 7.2 or lower, still even more preferably 6.4 or lower, more preferably 6.3 or lower, more preferably 6.2 or lower and most preferably 6.15 or lower. The mashing condition can be set so that the wort obtained through the wort preparation step or the non-alcohol beer-taste beverage obtained through the wort preparation step and the product preparation step has for example the ratio of the sum of the weights of the monosaccharide(s) and the disaccharide(s) to the weight of the trisaccharide(s) (sum of w/v% of the monosaccharide(s) and the disaccharide(s)/w/v% of the trisaccharide(s)) that is from 3.5 to 10 inclusive, preferably from 4.8 to 8 inclusive, more preferably from 5.8 to 6.4 inclusive, and even more preferably from 6 to 6.2 inclusive. Further, the mashing condition can be set so that the wort obtained through the wort preparation step or the non-alcohol beer-taste beverage obtained through the wort preparation step and the product preparation step has the ratio of the sum of the weights of the monosaccharide(s) and the disaccharide(s) to the weight of the trisaccharide(s) (sum of w/v% of the monosaccharide(s) and the disaccharide(s)/w/v% of the trisaccharide(s)) that is from 2.5 to 11 inclusive, preferably from 3.5 to 10 inclusive, more preferably from 4.2 to 9 inclusive, even more preferably from 4.8 to 8 inclusive, still more preferably from 5.3 to 7.2 inclusive, still even more preferably from 5.8 to 6.4 inclusive, more preferably from 5.9 to 6.3 inclusive, more preferably from 6 to 6.2 inclusive, and most preferably from 6 to 6.15 inclusive.

The conditions of the mashing step can be set so that the saccharide content in wort obtained through the wort preparation step or in the non-alcohol beer-taste beverage obtained through the wort preparation step and the product preparation step is in a range of any combination of a lower limit of 0.1 g/100 ml or higher, preferably 0.15 g/100 ml or higher, more preferably 0.2 g/100 ml or higher, and an upper limit of 1.2 g/100 ml or lower, preferably 1.0 g/100 ml or lower, more preferably 0.8 g/100 ml or lower, even more preferably 0.6 g/100 ml or lower, still more preferably 0.5 g/100 ml or lower, still even more preferably 0.4 g/100 ml or lower, more preferably 0.35 g/100 ml or lower, and most preferably 0.30 g/100 ml or lower. The conditions of processing in the mashing step can be for example set so that the saccharide content in wort obtained through the wort preparation step or in the non-alcohol beer-taste beverage obtained through the wort preparation step and the product preparation step is from 0.1 to 2.0 g/100 ml inclusive, preferably from 0.1 to 1.0 g/100 ml inclusive, more preferably from 0.1 to 0.5 g/100 ml inclusive. Further, the conditions of the mashing step can be for example set so that the saccharide content in wort obtained through the wort preparation step or in the non-alcohol beer-taste beverage obtained through the wort preparation step and the product preparation step is from 0.1 to 1.2 g/100 ml inclusive, preferably from 0.1 to 1.0 g/100 ml inclusive, more preferably from 0.1 to 0.8 g/100 ml inclusive, even more preferably from 0.1 to 0.6 g/100 ml inclusive, still more preferably from 0.1 to 0.5 g/100 ml inclusive, still even more preferably from 0.1 to 0.4 g/100 ml inclusive, more preferably from 0.1 to 0.35 g/100 ml inclusive, more preferably from 0.15 to 0.35 g/100 ml inclusive, and most preferably from 0.2 to 0.3 g/100 ml inclusive.

A suitable mashing pattern can be selected for the temperature of the mashing step according to the flavor design of the marketable product. In the mashing step, an inherent enzyme derived from malt can be used alone, or in combination with carbohydrase which is added to increase the saccarification efficiency and to obtain the desired saccharide composition.

Secondary ingredients can also be added in the mashing step. Any material commonly used in producing beer can be used as the secondary ingredient, such as corn starch, corn grits, and rice.

The wort filteration step in the present specification is a step of filtering the mash after the mashing step.

The wort-boiling step mentioned in the present specification is a step of adding hops to a filtrate that is obtained by the wort filteration step, and boiling the mixture. Hops should preferably be added before the start of boiling, at the same time as the start of boiling, or immediately after the start of boiling. Hops can be added all at once, or in successive portions.

In addition, ingredients other than hops can be added during the wort-boiling step. Such ingredients include ingredients commonly used in producing beer, such as colorants, flavors and the like.

Wort can be prepared by performing the above wort-boiling step. The wort contains the extract component(s), the monosaccharide(s), the disaccharide(s), and the trisaccharide(s). The total amount of the extract component(s) in the wort can be in a range of any combination of a lower limit of 0.1% by weight or higher, preferably 0.15% by weight or higher, more preferably 0.2% by weight or higher, and an upper limit of 1.2% by weight or lower, preferably 1% by weight or lower, more preferably 0.8% by weight or lower, even more preferably 0.6% by weight or lower, still more preferably 0.5% by weight or lower, still even more preferably 0.4% by weight or lower, more preferably 0.35% by weight or lower, and most preferably 0.3% by weight or lower. For example, the total amount of the extract component(s) in the above wort can be from 0.1. to 0.5% by weight inclusive, preferably from 0.1 to 0.25% by weight inclusive, more preferably from 0.1 to 0.125% by weight inclusive. Further examples of the total amount of the extract component(s) in the wort are from 0.1 to 1.2% by weight inclusive, preferably from 0.1 to 1% by weight inclusive, more preferably from 0.1 to 0.8% by weight inclusive, even more preferably from 0.1 to 0.6% by weight inclusive, still more preferably from 0.1 to 0.5% by weight inclusive, still even more preferably from 0.1 to 0.4% by weight inclusive, more preferably from 0.1 to 0.35% by weight inclusive, more preferably from 0.15 to 0.35% by weight inclusive, and most preferably from 0.2 to 0.3% by weight inclusive.

The ratio of the sum of the weights of the monosaccharide(s) and the disaccharide(s) to the weight of the trisaccharide(s) (sum of w/v% of the monosaccharide(s) and the disaccharide(s)/w/v% of the trisaccharide(s)) in the wort can be in a range defined by any combination of a lower limit of 2.5 or higher, preferably 3.5 or higher, more preferably 4.2 or higher, even more preferably 4.8 or higher, still more preferably 5.3 or higher, still even more preferably 5.8 or higher, more preferably 5.9 or higher, and most preferably 6 or higher, and an upper limit of 11 or lower, preferably 10 or lower, more preferably 9 or lower, even more preferably 8 or lower, still more preferably 7.2 or lower, still even more preferably 6.4 or lower, more preferably 6.3 or lower, more preferably 6.2 or lower, and most preferably 6.15 or lower. The ratio of the sum of the weights of the monosaccharide(s) and the disaccharide(s) to the weight of the trisaccharide(s) (sum of w/v% of the monosaccharide(s) and the disaccharide(s)/w/v% of the trisaccharide(s)) in the wort can for example be from 3.5 to 10 inclusive, preferably from 4.8 to 8 inclusive, more preferably from 5.8 to 6.4 inclusive, even more preferably from 6 to 6.2 inclusive.

Further examples of the ratio of the sum of the weights of the monosaccharide(s) and the disaccharide(s) to the weight of the trisaccharide(s) (sum of w/v% of the monosaccharide(s) and the disaccharide(s)/w/v% of the trisaccharide(s)) in the wort are from 2.5 to 11 inclusive, preferably from 3.5 to 10 inclusive, more preferably from 4.2 to 9 inclusive, even more preferably from 4.8 to 8 inclusive, still more preferably from 5.3 to 7.2 inclusive, still even more preferably from 5.8 to 6.4 inclusive, more preferably from 5.9 to 6.3 inclusive, more preferably from 6 to 6.2 inclusive, and most preferably from 6 to 6.15 inclusive.

Further, the wort of the present invention can contain the *mugi*-derived extract component(s) in an amount in a range defined by any combination of a lower limit of 0.1% by weight or higher, preferably 0.15% by weight or higher, more preferably 0.2% by weight or higher, and an upper limit of 1.2% by weight or lower, preferably 1% by weight or lower, more preferably 0.8% by weight or lower, even more preferably 0.6% by weight or lower, still more preferably 0.5% by weight or lower, still even more preferably 0.4% by weight or lower, more preferably 0.35% by weight or lower, and most preferably 0.3% by weight or lower. Further, the wort of the present invention can for example contain the *mugi*-derived extract component(s) in an amount of from 0.1 to 0.5% by weight inclusive, preferably from 0.1 to 0.25% by weight inclusive, more preferably from 0.1 to 0.125% by weight inclusive. Further, the wort of the present invention can for example contain the *mugi*-derived extract component(s) in an amount of from 0.1 to 1.2% by weight inclusive, preferably from 0.1 to 1% by weight inclusive, more preferably from 0.1 to 0.8% by weight inclusive, even more preferably from 0.1 to 0.6% by weight inclusive, still more preferably from 0.1 to 0.5% by weight inclusive, still even more preferably from 0.1 to 0.4% by weight inclusive, more preferably from 0.1 to 0.35% by weight inclusive, more preferably from 0.15 to 0.35% by weight inclusive, and most preferably from 0.2 to 0.3% by weight inclusive.

The wort of the present invention can be stored until it is used in the next product preparation step. Wort can be stored in a storage tank, a container and the like at a normal temperature (25°C) or lower, but it is preferable to cool wort during storage. The wort can be cooled herein at, for example, 20°C or lower, preferably 15°C or lower, and more preferably 10°C or lower.

The product preparation step as used herein is a step of preparing a non-alcohol beer-taste beverage using wort obtained through the wort-boiling step. Seasoning components and carbon acid gas can be added to the wort. The taste of the non-alcohol beer-taste beverage can be adjusted to any taste by adding the seasoning components. Seasoning components include acidulants, flavors, and sweeteners. Preservatives, such as Vitamin C, can be added as necessary. Subsequently, wort can be kept still and further filtered, as necessary, to obtain the non-alcohol beer-taste beverage.

The above mentioned production method of non-alcohol beer-taste beverage is suitable for application to the production of the non-alcohol beer-taste beverage of the present invention.

### <Other components>

Components that are approved as food additives can be used in the present invention as long as it does not hinder the advantageous effects of the present invention. Examples include sweeteners, various acidulants, flavors, yeast extracts, colorants such as caramel colors, saponin-based substances extracted from plants such as soybean saponin or quillaja saponin, plant protein- and peptide-containing substances such as corn, soybean, or fava been, proteinaceous substances such as bovine serum albumin, seasoning agents such as dietary fiber or amino acids, antioxidants such as ascorbic acid.

### <Beverages Packed in Containers>

The non-alcohol beer-taste beverages of the present invention can be packed in containers. Containers of any shape or material can be used; specifically, bottles, cans, kegs, PET bottles or other containers can be filled with the beverage and sealed.

### EXAMPLES

The present invention is described in more detail by the Examples, without being limited in scope by the Examples.

### <Production of Non-Alcohol Beer-Taste Beverages>

Wort samples (Examples 1 to 3) and non-alcohol beer-taste beverages (Examples 4 to 6) of the present invention having saccharide compositions of the monosaccharides, the disaccharides and the trisaccharides in the desired range, as well as wort samples (Comparative Examples 1 to 3) and non-alcohol beer-taste beverages (Comparative Examples 4 to 6) having saccharide compositions of the monosaccharides, the disaccharides and the trisaccharides that are outside the desired scope were produced by the following method.

Concerning Examples 1 to 3 and Comparative Examples 1 to 3, 20 kg of malt was crushed to an appropriate grain size and put in a tank for preparation, then 120 L of warm water was added to form a mash of about 50°C. The mash was kept at 50°C for 30 minutes, followed by a gradual increase in the temperature to between 65°C and 72°C to conduct saccharification for 60 minutes. The mash after saccharification has completed was heated to 77°C, then transferred to the wort filtering tank for filteration to obtain a filtrate.

Warm water was added to a portion of the obtained filtrate. The mixed ratio of the filtrate and warm water was adjusted so that the total amount of the extract components after the completion of boiling described below will be 1.0% by weight.

The mixture was adjusted to a production scale of 100 L, and hops were added to it, then it was boiled at 100°C for 80 minutes. Lees were separated from the boiled liquid, and the remnant was cooled to about 2°C, then the saccharide content was measured and the remnant was diluted with distilled water to give a solution having a total amount of the extract components of 0.3% by weight.

To prepare wort samples having a total amount of the extract components that is beyond 0.3% by weight, glucose, maltose (malt sugar) and maltotriose were added to to the above prepared solution having a total amount of the extract components of 0.3% by weight, to adjust the total amount of the extract components (Examples 2 and 3, and Comparative Examples 1 and 3). On the other hand, to prepare wort samples having a total amount of the extract components that is lower than 0.3% by weight, the above prepared solution having a total amount of the extract components of 0.3% by weight was diluted with distilled water, to adjust the total amount of the extract components (Example 1, Comparative Example 2).

In this way, the wort samples of the present invention (Examples 1 to 3) having a saccharide compositions of the monosaccharides, the disaccharides, and the trisaccharides in the desired range, and the wort samples (Comparative Examples 1 to 3) having a saccharide compositions of the monosaccharides, the disaccharides, and the trisaccharides that are outside the desired range were prepared.

Appropriate amounts of antioxidants, flavors, and acidulants (added in an amount that makes pH to be less than 4) were added to these wort samples before the wort samples were stored for about 24 hours. Carbon acid gas was added in an appropriate amount during the process. Then, the mixtures were subjected to filtration and sterilization (heated at 65 °C or higher for 10 minutes) to obtain the non-alcohol beer-taste beverages of the present invention (Examples 4 to 6) and the non-alcohol beer-taste beverages (Comparative Examples 4 to 6).

Note that the saccharide concentrations (weight/volume%) were measured by the known liquid chromatography method (Analytica-EBC (2010.8) 8.7).

### <Assessment of Flavor>

The flavor of the wort samples and the non-alcohol beer-taste beverage prepared above was assessed using a sensory test based on the following rating system. Five well-trained sensory panelists rated the existence of "snappiness" and "body" on a scale of 1 to 4. The ratings according to the following system were averaged: "identifiable"=4, "somewhat identifiable"=3, "slightly identifiable"=2, "not identifiable"= 1. Then, a separate rating scale of 1 to 3 was set forth according to the obtained average.
Average value 1.0 or higher to lower than 2.0 X;
Average value 2.0 or higher to lower than 3.0 Δ
Average value 3.0 or higher to 4.0 or lower ○.
<Assessment of the Extract Components>

The extract components were measured according to "Beer Analysis Methods of BCOJ (2004.11.1 Revised ed.) 7.2 Extracts".

### <Assessment of Calories>

The calorie contents were calculated according to the "On Analysis Methods, etc. for Nutrients, etc. Listed in the Nutrition Labelling Standards" as published in association with the Health Promotion Act.

### <Assessment of Saccharides>

The saccharide contents were measured using the equation given in the the Nutrition Labelling Standards for Foods (Health, Labor and Welfare Ministry Notice No. 176 in 2003).

### <Assessment of Quality>

The result of the flavor assessment on the wort samples of Examples 1 to 3 and Comparative Examples 1 to 3 is shown in Table 1 below.

**[Table 1]**

| Wort samples | Examples | | | Comp.Ex | | |
|---|---|---|---|---|---|---|
| | 1 | 2 | 3 | 1 | 2 | 3 |
| Total amount of extract components (wt%) | 0.1 | 0.4 | 1.0 | 0.4 | 0.05 | 0.4 |
| monosaccharides (w/v%) | 0.008 | 0.03 | 0.11 | 0.02 | 0.004 | 0.06 |
| disaccharides (w/v%) | 0.023 | 0.09 | 0.32 | 0.07 | 0.011 | 0.06 |
| trisaccharides (w/v%) | 0.005 | 0.02 | 0.07 | 0.04 | 0.003 | 0.01 |
| weight ratio of (monosaccharides+ disaccharides)/trisaccharides | 6.00 | 6.00 | 6.14 | 2.25 | 6.00 | 12.00 |
| calorie | 0.4 | 1.6 | 4.0 | 1.6 | 0.2 | 1.6 |
| (kcal/100ml) | | | | | | |
| saccharides | 0.1 | 0.4 | 1.0 | 0.4 | 0.05 | 0.4 |
| (g/100ml) | | | | | | |
| body | Δ | ○ | ○ | ○ | × | ○ |
| snappiness | ○ | ○ | ○ | × | ○ | × |

As shown in Table 1, the snappiness was identified for the wort samples of Examples 1 to 3. When comparing these samples, it was seen that Example 1, characterized by a low total amount of the extract components, provides a slightly low body, but the body is not so low that the product cannot be marketed.

The wort sample of Comparative Example 1 was not desirable, since no snappiness was identified. The wort sample of Comparative Example 2 was not desirable, since, although the snappiness was identified, no body was felt. Also, the wort sample of Comparative Example 3 was not desirable, since no snappiness was identified.

Next, the assessment result of the flavor of the non-alcohol beer-taste beverages of Examples 4 to 6 and Comparative Examples 4 to 6 is shown in Table 2 below.

**[Table 2]**

| Non-fermented beer-taste beverage | Examples | | | Comp.Ex | | |
|---|---|---|---|---|---|---|
| | 4 | 5 | 6 | 4 | 5 | 6 |
| Total amount of extract components (wt%) | 0.2 | 0.5 | 1.1 | 0.5 | 0.15 | 0.5 |
| monosaccharides (w/v%) | 0.008 | 0.03 | 0.11 | 0.02 | 0.004 | 0.06 |
| disaccharides (w/v%) | 0.023 | 0.09 | 0.32 | 0.07 | 0.011 | 0.06 |
| trisaccharides (w/v%) | 0.005 | 0.02 | 0.07 | 0.04 | 0.003 | 0.01 |
| weight ratio of (monosaccharides+ disaccharides)/trisaccharides | 6.00 | 6.00 | 6.14 | 2.25 | 6.00 | 12.00 |
| calorie | 0.8 | 2.0 | 4.4 | 2.0 | 0.6 | 2.0 |
| (kcal/100ml) | | | | | | |
| saccharides | 0.2 | 0.5 | 1.1 | 0.5 | 0.15 | 0.5 |
| (g/100ml) | | | | | | |
| body | ○ | ○ | ○ | ○ | × | ○ |
| snappiness | ○ | ○ | ○ | × | ○ | × |

As shown in Table 2, the snappiness was identified for the non-alcohol beer-taste beverages of Examples 4 to 6. The non-alcohol beer-taste beverage of Comparative Example 4 was not desirable, sine no snappiness was identified. The non-alcohol beer-taste beverage of Comparative Example 5 was not desirable, since, although the snappiness was identified, no body was felt. Also, the non-alcohol beer-taste beverage of Comparative Example 6 was not desirable, since no snappiness was identified.

## Claims

1. A non-alcohol beer-taste beverage, wherein a total amount of an extract component(s) is from 0.1 to 0.5% by weight inclusive, and a ratio of the sum of the weights of a monosaccharide(s) and a disaccharide(s) to the weight of a trisaccharide(s) (sum of w/v% of the monosaccharide(s) and the disaccharide(s)/w/v% of the trisaccharide(s)) is from 2.5 to 11 inclusive.

2. The non-alcohol beer-taste beverage of Claim 1, wherein the ratio of the sum of the weights of the monosaccharide(s) and the disaccharide(s) to the weight of the trisaccharide(s) is from 4.8 to 8 inclusive.

3. The non-alcohol beer-taste beverage of Claim 1, wherein the ratio of the sum of the weights of the monosaccharide(s) and the disaccharide(s) to the weight of the trisaccharide(s) is from 6 to 6.2 inclusive.

4. The non-alcohol beer-taste beverage according to any one of Claims 1 to 3, wherein the total amount of the extract component(s) is from 0.1 to 0.35% by weight inclusive.

5. The non-alcohol beer-taste beverage according to any one of Claims 1 to 4, wherein a calorie content is from 0.4 to 2 kcal/100 ml inclusive.

6. The non-alcohol beer-taste beverage according to Claim 5, wherein the calorie content is from 0.4 to 1.4 kcal/100 ml inclusive.

7. The non-alcohol beer-taste beverage according to any one of Claims 1 to 6, wherein a saccharide content is from 0.1 to 0.5 g/100 ml inclusive.

8. The non-alcohol beer-taste beverage according to Claim 7, wherein the saccharide content is from 0.1 to 0.35 g/100 ml inclusive.

9. The non-alcohol beer-taste beverage according to any one of Claims 1 to 8, wherein the extract component(s) comprise a *mugi*-derived extract component(s).

10. The non-alcohol beer-taste beverage according to any one of Claims 1 to 9, which is a non-fermented, non-alcohol, beer-taste beverage.

11. Wort having a total amount of an extract component(s) that is from 0.1 to 0.5% by weight inclusive, and a ratio of the sum of the weights of a monosaccharide(s) and a disaccharide(s) to the weight of a trisaccharide(s) (sum of w/v% of the monosaccharide(s) and the disaccharide(s)/w/v% of the trisaccharide(s)) that is from 2.5 to 11 inclusive.

12. The wort according to Claim 11, wherein the ratio of the sum of the weights of the monosaccharide(s) and the disaccharide(s) to the weight of the trisaccharide(s) is from 4.8 to 8 inclusive.

13. The wort according to Claim 11, wherein the ratio of the sum of the weights of the monosaccharide(s) and the disaccharide(s) to the weight of the trisaccharide(s) is from 6 to 6.2 inclusive.

14. The wort according to any one of Claims 11 to 13, wherein the total amount of the extract component(s) is from 0.1 to 0.35% by weight inclusive.

15. A production method of a non-alcohol beer-taste beverage comprising a step of adding a seasoning component and a carbon acid gas to wort having a total amount of an extract component(s) that is from 0.1 to 0.5% by weight inclusive, and a ratio of the sum of the weights of a monosaccharide(s) and a disaccharide(s) to the weight of a trisaccharide(s) (sum of w/v% of the monosaccharide(s) and the disaccharide(s)/w/v% of the trisaccharide(s)) that is from 2.5 to 11 inclusive.

16. The production method according to Claim 15, wherein the ratio of the sum of the weights of the monosaccharide(s) and the disaccharide(s) to the weight of the trisaccharide(s) is from 4.8 to 8 inclusive.

17. The production method according to Claim 15, wherein the ratio of the sum of the weights of the monosaccharide(s) and the disaccharide(s) to the weight of the trisaccharide(s) is from 6 to 6.2 inclusive.

18. The production method according to any one of Claims 15 to 17, using dark colored malt at from 20 to 80% by weight inclusive, relative to the total amount of the malt.

19. The production method according to any one of Claims 15 to 18, wherein the beer-taste beverage is a non-fermented, non-alcohol, beer-taste beverage.

20. The production method according to any one of Claims 15 to 19, for producing the non-alcohol beer-taste beverage according to any one of Claims 1 to 10.
